# EUROPEAN PATENT SPECIFICATION

(11) **EP 0 883 954 B1**
(45) Date of publication and mention of the grant of the patent: **06.11.2002**
(21) Application number: 97903377.6
(22) Date of filing: 24.02.1997
(51) Int. Cl.: H04M 1/02

(54) **ELECTRONIC DEVICE WITH HOUSING SUPPLEMENT**
ELEKTRONISCHES GERÄT MIT ZUSÄTZLICHEM GEHÄUSE
DISPOSITIF ELECTRONIQUE AVEC UN ELEMENT SUPPLEMENTAIRE SUR LE BOITIER

(30) Priority: 28.02.1996 EP 96102988
(43) Date of publication of application: 16.12.1998
(60) Divisional application: 01202744.7
(73) Proprietor: Nokia Corporation, 02150 Espoo (FI)
(72) Inventor: FUHRMANN, Thomas, D-48249 Dülmen (DE); WILKE, Annett, D-44791 Bochum (DE); UMBACH, Dirk, D-45525 Hattingen (DE)
(74) Representative: Haws, Helen Louise
(86) International application number: EP9700909
(87) International publication number: WO97032423

(56) References cited:
- GB-A- 2 293 517
- US-A- 4 292 481
- US-A- 4 433 216
- US-A- 5 134 654
- US-A- 5 140 632
- US-A- 5 146 615

## Description

The invention relates to a mobile electronic device having a housing which has a housing wall with openings for control and/or display elements.

A mobile electronic device of this kind is used by private individuals and may be for example, a cordless phone, mobile phone or a pocket calculator.

US 5146615 discloses a radio transceiver comprising a housing including a front cover, a plurality of interchangeable control panels adapted for selective alternative attachment to the front cover and a plurality of interchangeable keypads adapted for selective alternative attachment to the front cover in underlying relationship with a respective one of the control panels. Each control panel includes a front face, rear face and peripheral edges and has apertures through which the keys of the keypad project and holes through which screws are inserted to connect the control panel to the radio transceiver.

US4292481 discloses the attachment of a decorative appliqué to the faceplate of a standard push-button telephone. The push-button telephone comprises a telephone housing and a telephone handset which is connected to the housing by a telephone cord. A faceplate is removably attached to the front face of the housing and a set of basic push-buttons project upwardly through openings provided in the faceplate. The faceplate is composed of a flat single piece of plastic having a notch along its upper edge and a pair of tabs along its lower edge. The housing is provided with a pair of slots which receive the tabs and a spring detent or the like which engages the notch and in this manner, the faceplate is releasably attached to the housing.

US4433216 discloses a two member flat faceplate assembly for a telecommunications terminal. The faceplate is a sandwich structure having top and bottom members. A plurality of apertures through the members permit passage of pushbuttons. Channels open at one end are associated with at least some of the apertures for the introduction of cards having indicia relating to a pushbutton.

US5140632 discloses an adaptor unit designed to fit over the touch tone telephone pad of a cellular car phone. The adaptor unit consists of a plastic rectangular housing having a top surface and depending arms from the sides of the top surface. The depending arms have inwardly projecting tips designed to snap fit around the bottom sides of the handset of the car phone. The depending arms are flexible so that they expand outwardly when pressed around the body of the car phone handset. The adaptor unit has a series of push buttons on the upper surface of the adaptor unit corresponding to the push buttons of the handset.

US5134654 discloses a high security shield for use on the upper housing of conventional telephone paystations consisting of a thick stainless steel U-shaped wrap-around welded to the standard housing.

The NOKIA 2110 is a mobile electronic device (mobile phone) having:
control elements and/or display elements; an external wall element (cover) having openings which are aligned with the control elements and/or display elements; and
attachment means (screws) for detachably connecting the external wall element to the electronic device, The phone does not have a housing for the control elements and/or display elements. The cover is three dimensional and houses the control elements and/or display elements. Therefore when the cover is removed, and in the absence of a housing, the phone's electronics are exposed. The screws used to attach the cover require a professional with a special tool for their removal and attachment.

If, for personal reasons or because of predetermined requirements, the external appearance of such a mobile electronic device, for example the shape of the housing or its colour, is to be modified, as a rule this must be carried out by a specialist since during such an operation the electronic components present in the housing of the mobile electronic device are usually exposed. Modification of the appearance of the housing of the mobile electronic device is thus laborious, time-consuming and expensive and, moreover, can as a rule only rarely be carried out by private individuals.

In accordance with one aspect of the invention there is provided a mobile electronic device having:
control elements and/or display elements; an external wall element having openings which are aligned with the control elements and/or display elements; and attachment means for detachably connecting the external wall element to the mobile electronic device, characterised in that:
   the mobile electronic device further comprises a housing which has a housing wall with openings for the control elements and/or display elements; the attachment means detachably connects to the housing the external wall element; the external wall element at least partially covers the housing wall and engages, at least partially, over further housing walls of the housing; and the openings of the external wall element are aligned with the openings in the housing wall.

In accordance with another aspect of the invention there is provided an external wall element for detachable connection, by attachment means, to the housing of a mobile electronic device wherein the housing has a housing wall with openings for control elements and/or display elements, wherein the external wall element at least partially covers the housing wall and engages, at least partially, over further housing walls of the housing when connected to the housing and has openings which are aligned with the openings in the housing wall when connected to the housing.

A mobile electronic device in accordance with the invention allows the external appearance of the housing to be modified rapidly and easily even by non-professionals.

With the mobile electronic device according to the invention, a user thus has the possibility of modifying the appearance or design of the housing in an extremely short time and without any difficulty by selecting and fitting on an appropriate external wall element. The user can thus more or less change the housing according to his wishes if external elements with different shapes and colours are available to him for this purpose. Even external wall elements made of different materials are possible.

When the housing wall provided with openings is covered by the external wall element, the openings provided in the housing wall and in the external wall element are aligned with one another so that for example the push-button keys which project through the openings can continue to be used even after the external wall element is fitted on to the housing wall or display elements which are inserted into the openings can continue to be read. This also applies to microphones or loudspeakers inserted into opening, for example in the case of cordless telephones.

With the mobile electronic device according to the invention, the electronics provided in the device are always protected against access by the customer when the external appearance of the housing is modified. Therefore, if one external wall element is to be replaced by another in order to give the mobile electronic device a new design, there is no risk of the electronics present in the housing being damaged when the external wall elements are interchanged or of the user being subjected to danger by the electronics present inside the housing. In this respect, the external wall elements could even be interchanged when a mobile electronic device is operating.

According to an advantageous refinement of the invention, the external wall element can engage, at least partially, over further housing walls of the housing so that the design of the housing can be modified to an even greater extent or adapted to the wishes of the user to an even greater degree.

At the same time, the profile of the external wall element can follow the profile of the housing walls of the housing if emphasis is being placed not so much on the modification of the shape of the housing but rather on changing the colour or the type of material of the housing. However, the external wall elements can of course have different shapes which can also deviate from one another to a greater degree provided it is ensured that after the respective external wall elements have been connected to the housing the respective openings in the fitted-on external wall element and in the housing wall in question are aligned with one another.

According to a very advantageous development of the invention, the external wall element can be of, for example, shell-shaped design so that it can be fitted for example with one edge on to a base which projects outwards beyond the side walls of the housing.

Any desired attachment means can be used to attach the external wall element to the housing of the mobile electronic device, but attachment means with press-on/catch closure can preferably be used. They ensure a secure connection between the external wall element and the housing and, moreover, can be easily used without a special tool being required for them.

The invention is explained in detail below with reference to the drawing, in which:
Figure 1 shows a cordless telephone or mobile phone with external wall element removed;
Figure 2 shows the cordless or mobile phone according to Figure 1 with the external wall element fitted on;
Figure 3 shows the external wall element from the underside; and
Figure 4 shows a section through the wall of the external wall element.

The invention is explained below with reference to a cordless telephone or mobile phone which serves as an example of a mobile electronic device. However, the invention can also be used in other mobile electronic devices, for example in pocket calculators.

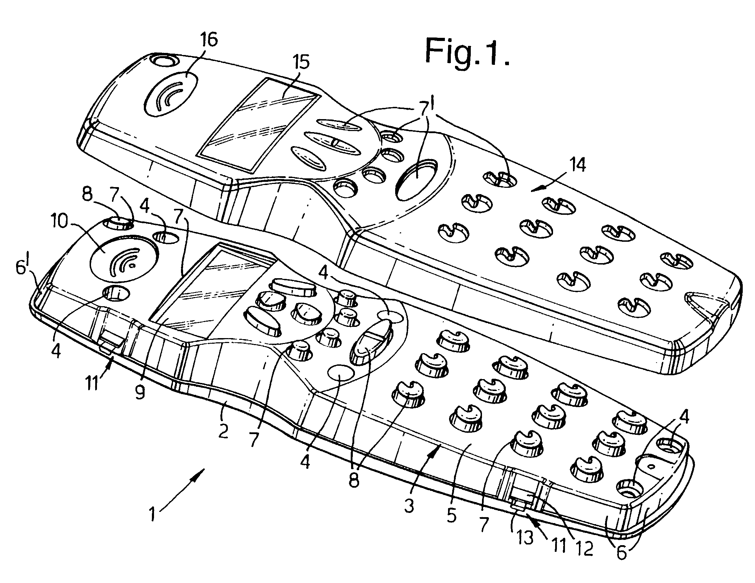

In accordance with Figure 1, a cordless telephone or mobile phone according to the invention has a housing 1 with which a plate-shaped base element 2 and a shell-shaped housing element 3 are associated. The plate-shaped based element 2 and the shell-shaped housing element 3 are connected to one another using screws (not illustrated) which project through openings 4 in the shell-shaped housing element 3 and are screwed into sockets (not illustrated) which are fixedly connected to the inside of the plate-shaped base element 2. Inside the housing 1 there is a carrier plate, attached in a suitable way, for electronic components etc.

The shell-shaped housing element 3 has a housing wall 5 which is located essentially parallel with the plate-shaped base element 2 and at a distance therefrom and is integrally connected to side walls 6 which are supported with their free or lower edge on the plate-shaped base element 2. In this arrangement, the plate-shaped base element 2 projects outwards beyond the side walls 6 by constant distance in its edge region so that a profile with an identical contour is obtained.

In the housing wall 5 there is a plurality of through-openings 7 for electronic components which are mounted on the carrier plate, already mentioned, inside the housing 1, and partially project through the through-openings 7. The through-openings 7 can be provided for example for push-button keys 8, for a display device 9 or for a loudspeaker device/microphone device 10. A corresponding through-opening 7 may also be present in the upper side wall 6 for an aerial.

On the side walls 6, extending in the longitudinal direction of the housing 1, of the shell-shaped housing element 3 there are also in each case two attachment means 11 which are designed as press-on/catch closures at a distance from one another. They are located in each case at the front and rear ends of the telephone. The attachment means 11 have a catch projection 12 which is prestressed outwards in a sprung fashion and can be pressed inwards into the housing 1 counter to the outwardly acting spring force by means of an externally accessible activation element 13. These attachment means serve to attach to the housing 1 an external wall element 14 which is fitted on to the shell-shaped housing element 3 and is also of shell-shaped design.

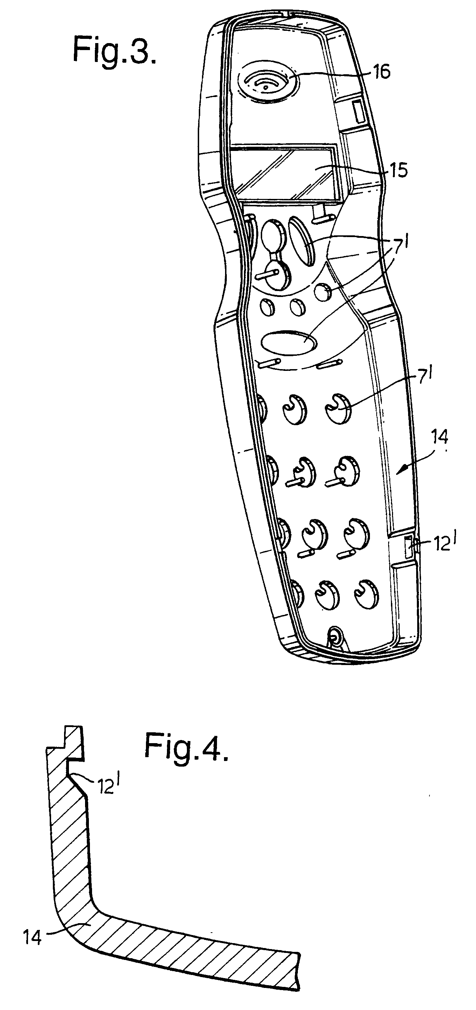

The shell-shaped external wall element 14 which is illustrated in Figures 1 and 3 has approximately the same contour as the shell-shaped housing element 3 but is designed in such a way that it can receive the shell-shaped housing element 3 in it. If the external wall element 14, which is designed as a thin-walled shell, is fitted on to the shell-shaped housing element 3, the shell-shaped external wall element 14 is supported with the free or downwardly pointing edge of its side walls on that part of the plate-shaped base element 2 which projects outwards beyond the shell-shaped housing element 3. Here, the wall thickness of the side walls of the shell-shaped external wall element 14 corresponds to the distance by which the edge of the plate-shaped base element 2 projects outwards beyond the side walls 6, 6' of the shell-shaped housing element 3. As a result, no step remains in the connection area between the shell-shaped external wall element 14 and the plate-shaped base element 2. The height of the side walls of the shell-shaped external wall element 14 can be selected here such that the main face of the external wall element 14 comes to rest at a short distance from the housing wall 5 and as a result does not exert any pressure on the latter.

Likewise, openings 7' which are aligned with the openings 7 in the housing wall 5 of the shell-shaped housing element 3 are provided in the main face of the external wall element 14. Therefore, it is possible to continue to operate the telephone even when the external wall element 14 is fitted on to the shell-shaped housing element 3. At the same time, the push-button keys 8 can be of such a height that they also project outwards beyond the external wall element 14. Openings which are present in the external wall element 14 for the display device 9 and the loudspeaker device/microphone device 10 can be covered, for example by means of a transparent element 15 or a grill 16.

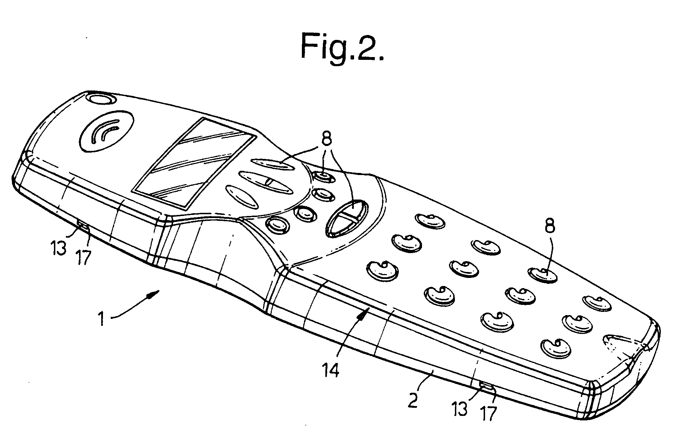

Figure 2 shows the cordless telephone or mobile phone in a state in which the shell-shaped external wall element 14 is fitted on to the shell-shaped housing element 3 and is detachably connected to the housing 1. On the internal faces of the long side walls of the external wall element 14 there are notches 12', one of which is seen in section in Figure 4, for the catch projections 12 of the attachment means 11 so that the catch projections 12 engage in the notches 12' as a result of the outwardly pressing spring force, and thus hold the external wall element on the housing 1. In this state, the activation elements 13 are also pushed outwards but only to such an extent that they do not project beyond the side edge of the plate-shaped base element 2 or of the external wall element 14. The activation elements 13 can extend here in a groove 17 in the upper face of the plate-shaped base element 2. If the activation elements 13 are pressed inwards, that is to say inwards along the groove 17, for example using a pointed object, they move the catch projections 12 correspondingly inwards along with them so that the said catch projections 12 disengage from the notches 12' on the inside of the side walls 6 of the external wall element 14. The external wall element 14 can then be removed from the housing 1.

The external wall element 14 is fitted on to the housing 1 by simply pressing it on. The catch projections 12 then engage automatically in the notches 12'.

The present invention includes any novel feature or combination of features disclosed herein either explicitly or any generalisation thereof irrespective of whether or not it relates to the claimed invention or mitigates any or all of the problems addressed.

In view of the foregoing description it will be evident to a person skilled in the art that various modifications may be made within the scope of the invention.

## Claims

1. A mobile electronic device having:
control elements (8) and/or display elements (9, 10);
an external wall element (14) having openings (7') which are aligned with the control elements (8) and/or display elements (9, 10); and
attachment means (11) for detachably connecting the external wall element (14) to the mobile electronic device,
**characterised in that**:
the mobile electronic device further comprises a housing (1) which has a first housing wall (5) with openings (7) for the control elements (8) and/or display elements (9, 10);
the attachment means detachably connects to the housing (1) the external wall element;
the external wall element at least partially covers the first housing wall (5) and engages, at least partially, over further housing walls of the housing; and
the openings (7') of the external wall element (14) are aligned with the openings (7) in the first housing wall.

2. A mobile electronic device according to claim 1, wherein the attachment means provides for user interchange of one external wall element for another.

3. A mobile electronic device according to claim 1 or 2, wherein the attachment means ensures a secure connection between the external wall element and the housing and are usable without a special tool being required.

4. A mobile electronic device according to any preceding claim, wherein the attachment means (11) have at least one press-on/catch closure (12,13).

5. A mobile electronic device according to any preceding claim, wherein the profile of the external wall element (14) follows the profile of the housing walls (5, 6, 6') of the housing (1).

6. A mobile electronic device according to any preceding claim wherein the external wall element is of shell-shaped design.

7. A mobile electronic device according to any preceding claim, wherein the housing (1) has a base (2) which projects beyond side walls (6, 6') of the housing (1) and on to which the external wall element (14) can be fitted with its edge.

8. A mobile electronic device according to any preceding claim, wherein it is designed as a mobile telephone.

9. An external wall element (4)
for detachable connection, by attachment means (11), to the housing (1) of a mobile electronic device wherein the housing (1) has a first housing wall (5) with openings (7) for control elements (8) and/or display elements (9, 10), **characterized in that** the external wall element (14) is adapted to cover at least partially the first housing wall (5) and to engage, at least partially, over further housing walls (6, 6') of the housing when connected to the housing and has openings (7') which are aligned with the openings (7) in the first housing wall (5) when connected to the housing (1).

10. An external wall element (4) according to claim 9 having a profile that follows the profile of the housing walls (5, 6, 6') of the housing (1).

11. An external wall element (4) according to claim 9 or 10 being of shell-shaped design.

12. An external wall element (4) according to any one of claims 9 to 11, wherein the housing (1) has a base (2) which projects beyond side walls (6, 6') of the housing (1) and the external wall element (14) is dimensioned so that it can be fitted with its edge on to the projection.

13. An external wall element (4) according to any one of claims 9 to 12, wherein the attachment means (11) have at least one press-on/catch closure (12,13).

14. An external wall element (4) according to any one of claims 9 to 13, wherein the attachment means (11) provides for user interchange of one external wall element for another.

15. An external wall element (4) according to any one of claims 9 to 14, wherein the attachment means (11) ensures a secure connection between the external wall element and the housing and is usable without a special tool being required.

16. An external wall element (4) according to any one of claims 9 to 15 for a mobile electronic device according to any one of claims 1 to 8.

## Patentansprüche

1. Elektronisches Mobilgerät mit:
- Steuerungselementen (8) und/oder Anzeigeelementen (9, 10);
- einem Außenwandelement (14) mit Öffnungen (7'), die mit den Steuerungselementen (8) und/oder Anzeigeelementen (9, 10) ausgerichtet sind; und
- einer Befestigungseinrichtung (11) zum lösbaren Verbinden des Außenwandelements (14) mit dem elektronischen Mobilgerät;
**dadurch gekennzeichnet, dass**
- das elektronische Mobilgerät ferner über ein Gehäuse (1) mit einer ersten Gehäusewand (5) mit Öffnungen (7) für die Steuerungselemente (8) und/oder Anzeigeelemente (9, 10) verfügt;
- die Befestigungseinrichtung das Gehäuse (1) lösbar mit dem Außenwandelement verbindet;
- das Außenwandelement die erste Gehäusewand (5) zumindest teilweise abdeckt und zumindest teilweise über weitere Gehäusewände des Gehäuses greift; und
- die Öffnungen (7') des Außenwandelements (14) mit den Öffnungen (7) in der ersten Gehäusewand ausgerichtet sind.

2. Elektronisches Mobilgerät nach Anspruch 1, bei dem die Befestigungseinrichtung dafür sorgt, dass ein Benutzer ein Außenwandelement gegen ein anderes austauschen kann.

3. Elektronisches Mobilgerät nach Anspruch 1 oder 2, bei dem die Befestigungseinrichtung für eine sichere Verbindung zwischen dem Außenwandelement und dem Gehäuse sorgt und sie verwendbar ist, ohne dass ein Spezialwerkzeug erforderlich wäre.

4. Elektronisches Mobilgerät nach einem der vorstehenden Ansprüche, bei dem die Befestigungseinrichtung (11) über mindestens einen Aufdrück/Rast-Verschluss (12, 13) verfügt.

5. Elektronisches Mobilgerät nach einem der vorstehenden Ansprüche, bei dem das Profil des Außenwandelements (14) dem Profil der Gehäusewände (5, 6, 6') des Gehäuses (1) folgt.

6. Elektronisches Mobilgerät nach einem der vorstehenden Ansprüche, bei dem das Außenwandelement von schalenförmigem Design ist.

7. Elektronisches Mobilgerät nach einem der vorstehenden Ansprüche, bei dem das Gehäuse (1) über eine Basis (2) verfügt, die über seine Seitewände (6, 6') übersteht und an der das Außenwandelement (14) mit seinem Rand angebracht werden kann.

8. Elektronisches Mobilgerät nach einem der vorstehenden Ansprüche, das als Mobiltelefon konzipiert ist.

9. Außenwandelement (14) für lösbare Verbindung, mittels einer Befestigungseinrichtung (11) am Gehäuse (1) eines elektronischen Mobilgeräts, wobei das Gehäuse (1) über eine erste Gehäusewand (5) mit Öffnungen (7) für Steuerungselemente (8) und/oder Anzeigeelemente (9, 10) verfügt, das Außenwandelement (14) so ausgebildet ist, dass es die erste Gehäusewand (5) zumindest teilweise bedeckt und zumindest teilweise über weitere Gehäusewände (6, 6') des Gehäuses greift, wenn es mit diesem verbunden ist, und es über Öffnungen (7') verfügt, die mit den Öffnungen (7) in der ersten Gehäusewand (5) so ausgerichtet sind, wenn sie mit dem Gehäuse (1) verbunden sind.

10. Außenwandelement (14) nach Anspruch 9, mit einem Profil, das dem Profil der Gehäusewände (5, 6, 6') des Gehäuses (1) folgt.

11. Außenwandelement (14) nach Anspruch 9 oder 10, das von schalenförmigem Design ist.

12. Außenwandelement (14) nach einem der Ansprüche 9 bis 11, bei dem das Gehäuse (1 über eine Basis (2) verfügt, die über seine Seitenwände (6, 6') übersteht, und wobei das Auβenwandelement (14) so dimensioniert ist, dass es mit seinem Rand auf den Vorsprung aufgesetzt werden kann.

13. Außenwandelement (14) nach einem der Ansprüche 9 bis 12, bei dem die Befestigungseinrichtung (11) über mindestens einen Aufdrück/Rast-Verschluss (12, 13) verfügt.

14. Außenwandelement (14) nach einem der Ansprüche 9 bis 13, bei dem die Befestigungseinrichtung (11) dafür sorgt, dass der Benutzer ein Außenwandelement gegen ein anderes austauschen kann.

15. Außenwandelement (14) nach einem der Ansprüche 9 bis 14, bei dem die Befestigungseinrichtung (11) für sichere Verbindung zwischen dem Außenwandelement und dem Gehäuse sorgt und sie verwendbar ist, ohne dass ein Spezialwerkzeug erforderlich wäre.

16. Außenwandelement (14) nach einem der Ansprüche 9 bis 15 für ein elektronisches Mobilgerät nach einem der Ansprüche 1 bis 8.

## Revendications

1. Dispositif électronique mobile comportant :
des éléments de commande (8) et/ou des éléments d'affichage (9, 10) ;
un élément de paroi externe (14) ayant des ouvertures (7') qui sont alignées avec les éléments de commande (8) et/ou des éléments d'affichage (9, 10) ; et
un moyen de fixation (11) pour connecter de manière détachable l'élément de paroi externe (14) au dispositif électronique mobile,
**caractérisé en ce que** :
le dispositif électronique mobile comprend, en outre, un logement (1) qui comporte une première paroi de logement (5) avec des ouvertures (7) pour les éléments de commande (8) et/ou les éléments d'affichage (9, 10) ;
le moyen de fixation connecte de manière détachable le logement (1) à l'élément de paroi externe ;
l'élément de paroi externe couvre au moins partiellement la première paroi de logement (5) et s'engage, au moins partiellement, sur d'autres parois de logement du logement ; et
les ouvertures (7') de l'élément de paroi externe (14) sont alignées avec les ouvertures (7) dans la première paroi de logement.

2. Dispositif électronique mobile selon la revendication 1, dans lequel le moyen de fixation procure à l'utilisateur l'interchangement d'un élément de paroi externe pour un autre.

3. Dispositif électronique mobile selon la revendication 1 ou 2, dans lequel le moyen de fixation assure une connexion sûre entre l'élément de paroi externe et le logement et sont utilisables sans qu'un outil spécial soit nécessaire.

4. Dispositif électronique mobile selon l'une quelconque des revendications précédentes, dans lequel le moyen de fixation (11) comporte au moins une enceinte de capture/enfoncement (12, 13).

5. Dispositif électronique mobile selon l'une quelconque des revendications précédentes, dans lequel le profil de l'élément de paroi externe (14) suit le profil des parois de logement (5, 6, 6') du logement (1).

6. Dispositif électronique mobile selon l'une quelconque des revendications précédentes, dans lequel l'élément de paroi externe est d'une conception en forme de coque.

7. Dispositif électronique mobile selon l'une quelconque des revendications précédentes, dans lequel le logement (1) a une base (2) qui dépasse au-delà des parois latérales (6, 6') du logement (1) et sur lequel l'élément de paroi externe (14) peut être ajusté avec son bord.

8. Dispositif électronique mobile selon l'une quelconque des revendications précédentes, dans lequel il est conçu comme un téléphone mobile.

9. Elément de paroi externe (4) pour connexion détachable, par un moyen de fixation (11), au logement (1) d'un dispositif électronique mobile dans lequel le logement (1) comporte une première paroi de logement (5) avec des ouvertures (7) pour les éléments de commande (8) et/ou des éléments d'affichage (9, 10), l'élément de paroi externe (14) est conçu pour recouvrir au moins partiellement la première paroi de logement (5) et pour engager, au moins partiellement, au-dessus d'autres parois de logement (6, 6') du logement lorsque connecté au logement et comporte des ouvertures (7') qui sont alignées avec les ouvertures (7) dans la première paroi de logement (5) lorsque connecté au logement (1).

10. Elément de paroi externe (4) selon la revendication 9 ayant un profil qui suit le profil des parois de logement (5, 6, 6') du logement (1).

11. Elément de paroi externe (4) selon la revendication 9 ou 10, étant d'une conception en forme de coque.

12. Elément de paroi externe (4) selon l'une quelconque des revendications 9 à 11, dans lequel le logement (1) comporte une base (2) qui dépasse au-delà des parois de logement (6, 6') du logement (1) et l'élément de paroi externe (14) est dimensionné de sorte qu'il peut être ajusté avec son bord sur la saillie.

13. Elément de paroi externe (4) selon l'une quelconque des revendications 9 à 12, dans lequel le moyen de fixation (11) comporte au moins une enceinte de capture/enfoncement (12, 13).

14. Elément de paroi externe (4) selon l'une quelconque des revendications 8 à 13, dans lequel le moyen de fixation (11) assure un interchangement par l'utilisateur d'un élément de paroi externe pour un autre.

15. Elément de paroi externe (4) selon l'une quelconque des revendications 9 à 14, dans lequel le moyen de fixation (11) assure une connexion sûre entre l'élément de paroi externe et le logement et est utilisable sans qu'un outil spécial soit nécessaire.

16. Elément de paroi externe (4) selon l'une quelconque des revendications 9 à 15 pour un dispositif électronique mobile selon l'une quelconque des revendications 1 à 8.
